# FASCICULE DE BREVET EUROPEEN

(11) **EP 3 391 294 B1**
(45) Date de publication et mention de la délivrance du brevet: **30.09.2020**
(21) Numéro de dépôt: 16825800.2
(22) Date de dépôt: 16.12.2016
(51) Int. Cl.: G06K 19/077, B42D 15/00, B42D 25/351, B42D 25/00

(54) **CARTE À PUCE À BORDS TRANSLUCIDES PERSONNALISÉS**
CHIPKARTE MIT ANGEPASSTEN DURCHSCHEINENDEN KANTEN
SMART CARD WITH CUSTOMIZED TRANSLUCENT EDGES

(30) Priorité: 16.12.2015 FR 1502610
(43) Date de publication de la demande: 24.10.2018
(73) Titulaire: Imprimerie Nationale S.A., 75016 Paris (FR)
(72) Inventeur: MICHAU, Pascal-Daniel, 59500 Douai (FR)
(74) Mandataire: Nicolle, Olivier
(86) Numéro de dépôt international: PCT/FR2016/000211
(87) Numéro de publication internationale: WO 2017/103351

(56) Documents cités:
- EP-A1- 2 854 078
- WO-A1-2011/090230
- FR-A1- 2 913 126
- FR-A1- 3 013 872

## Description

### Domaine de l'invention :

L'invention concerne le domaine des documents de sécurité tels que les cartes à puce à contact ou sans contact, ou les cartes en matière plastique, même dépourvues de puce, notamment celles aux formats connus sous ID1 (format des cartes bancaires), ID2 qui correspond au double de ID1 (format des cartes nationales d'identité françaises), et ID3 (format des passeports). Pour simplifier l'exposé, on utilisera de façon générique le terme de « carte » pour désigner l'ensemble des cartes ou documents de type précité.

### Etat de la Technique :

La plupart des cartes à puce ou autres documents de sécurité connus ont un corps de carte généralement multicouche, comportant au moins une couche de matériau opaque dont la surface correspond à la surface totale du document ou de la carte. Ceci permet de cacher dans le corps du document ou de la carte des éventuels composants microélectroniques comme une puce, une ou plusieurs antennes etc. Cela permet en outre de présenter une surface maximale de carte ou de document qui peut faire l'objet d'une personnalisation graphique, à savoir l'impression d'informations relatives au titulaire, ou à l'utilisation de la carte ou du document.

Les cartes totalement opaques, appelées aussi cartes à bords pleins, présentent l'inconvénient de pouvoir être délaminées, à savoir que des fraudeurs peuvent tenter de séparer les couches de la carte pour récupérer tel ou tel composant, notamment la puce intégrée dans le corps de carte.

La demande de brevet d'invention FR 2 913 126 décrit un document de sécurité comprenant une couche interne fibreuse comportant au moins un élément de sécurité, une couche externe recto et une couche externe verso, les deux couches externes étant en un matériau thermoplastique transparent, un dispositif RFID, étant logé au sein d'au moins une couche interne en un matériau transparent ou translucide.

Afin de rendre plus visibles les tentatives de manipulation frauduleuse des cartes, le document EP 1 770 608 B1 décrit une structure de carte à bords transparents, comportant autour d'un insert opaque, une couche inférieure et une couche supérieure en matière transparente, séparées entre elles par une entretoise également en matière transparente. Cette entretoise forme un cadre transparent autour de la carte, l'hypothèse étant qu'une tentative de délamination de la carte laisserait des traces visibles dans le cadre transparent.

Cependant, le marché semble indiquer que la surface imprimable perdue du fait des bords transparents de la carte est trop importante, au vu de la faible amélioration de la résistance de la carte à la contrefaçon.

### Buts de l'invention :

L'invention a pour but général de proposer une nouvelle structure de document de sécurité, notamment de carte à puce, susceptible de résoudre à la fois les inconvénients des cartes à bords transparents et des cartes à bords pleins.

L'invention sera décrite plus particulièrement dans le cadre d'un facteur de forme correspondant à celui d'une carte à puce au format ISO 7816 - 1, encore appelé format ID1, mais il est bien clair qu'elle s'applique à d'autres formats et à d'autres types de documents de sécurité.

L'invention a pour but plus particulier de proposer une carte dont les bords ne sont pas transparents, permettant ainsi de conserver toute la surface de carte pour l'impression d'informations et de données graphiques, tout en se différenciant visuellement des cartes à bords pleins connues.

Un autre but de l'invention est de proposer une carte dont les bords soient réalisés de manière à créer, pour certains modes d'observation, une rupture visuelle avec le reste de la carte. De plus, cette rupture visuelle doit de préférence être de nature à renforcer la résistance de la carte à la contrefaçon en permettant d'intégrer des motifs de sécurité de 1^{er}, 2^{ème}, et 3^{ème} niveaux.

On rappelle à cet égard que les niveaux de sécurité des éléments sécuritaires sont classés sur plusieurs niveaux.

Un élément de sécurité est dit de niveau 1 s'il est visible à l'œil nu en lumière ambiante.

Un élément de sécurité est dit de niveau 2 s'il n'est pas détectable à l'œil nu et si sa détection nécessite un outil de détection extérieur simple, comme une lampe UV à 365nm, ou une loupe à grossissement x8.

Un élément de sécurité est dit de niveau 3 s'il n'est pas détectable à l'œil nu et si sa détection nécessite un microscope ou un équipement très spécifique dit de laboratoire.

Concrètement, l'invention vise donc un document de sécurité pourvu d'un encadrement d'apparence variable, c'est-à-dire non transparent à la lumière lors d'une observation normale (ce qui implique qu'on ne reconnaîtrait pas une image placée derrière le bord de carte), et simplement translucide lorsqu'on observe la carte en face d'une lumière. Ceci doit permettre l'utilisation de l'intégralité de la surface de la carte pour la personnalisation graphique et l'impression, tout en mettant en évidence un cadre translucide lorsque la carte est observée en face d'une source de lumière.

### Objet de l'invention :

L'invention a par conséquent pour objet un document de sécurité selon la revendication 1.

Grâce à l'apport de cette couche spécifique d'apparence variable, l'intégralité de la surface du document peut être imprimée, puisque les bords du document n'apparaissent pas transparents lorsque l'observateur regarde le document normalement, c'est-à-dire lorsque l'observateur est situé du même côté que la lumière incidente sur le document. Par contre, lorsque l'observateur regarde le document "en transparence" ou par rétroéclairage, autrement dit lorsque le document est positionné entre une lumière incidente et l'observateur, ce dernier verra la zone opaque située au milieu, et autour de cette zone opaque, une zone translucide en forme de cadre ou de portion de cadre, dans laquelle se superposent le cadre transparent et la couche d'apparence variable.

Selon la complexité du document de sécurité, celui-ci peut comporter en outre une partie supérieure et/ou une partie inférieure formées chacune d'une ou de plusieurs couches transparentes en matière plastique.

Selon une variante de réalisation, ladite couche d'apparence variable est disposée directement contre le cadre transparent. Mais il est également possible que la couche d'apparence variable soit disposée entre des couches adjacentes de la partie supérieure ou des couches adjacentes de la partie inférieure.

Selon une variante de réalisation préférée, ladite couche d'apparence variable est intégrée au complexe multicouche. Elle peut alors en constituer l'une des couches externes, ou l'une des couches intermédiaires. En particulier, elle peut être disposée dans l'épaisseur du cadre, et notamment au centre de l'épaisseur du cadre.

En termes de facteur de forme, le document de sécurité peut notamment se présenter sous la forme d'une carte à puce ou sans puce au format ID1, d'une carte au format ID2, ou d'un passeport au format ID3.

Selon un mode de réalisation avantageux du document de sécurité selon l'invention, ladite couche d'apparence variable est par exemple en polycarbonate (PC), ou en un autre matériau thermoplastique apte à s'intégrer dans un assemblage laminé.

Le complexe multicouche du document de sécurité comporte de préférence une structure comportant au moins une couche opaque, et une ou plusieurs couches transparentes. Lorsqu'il s'agit d'un document de sécurité à fonctionnement sans contact, le complexe multicouche comporte en outre une feuille pourvue d'une antenne susceptible de communiquer avec une antenne d'un lecteur distant.

Selon un mode de réalisation avantageux, la fine couche d'apparence variable peut comporter une ou plusieurs découpes placées devant une zone opaque, de manière à faire apparaître sur le document assemblé un motif indétectable au toucher mais visible en vue directe ou par transparence devant une lumière (rétroéclairage).

Le complexe multicouche peut également comporter, en face de ladite découpe de la couche d'apparence variable, un motif imprimé ou gravé sur l'une des couches, un OVI (acronyme pour « Optical Variable Ink »), un OVD (acronyme pour « Optically Variable Device »), un hologramme, ou une piste d'antenne.

Selon un mode de réalisation, ledit cadre transparent comporte des colorants visibles sous éclairage standard et réagissant sous un éclairage spécifique, et la couche d'apparence variable comporte une ou plusieurs découpes placées en regard du cadre transparent coloré, de façon à créer une fenêtre totalement transparente apte à augmenter la visibilité des colorants réactifs lors de l'éclairage du document.

Selon une variante de réalisation, les découpes de la couche d'apparence variable sont décalées en bordure du document et situées en regard du cadre transparent. Le cadre transparent peut être coloré ou non. Il peut s'étendre sur tout le pourtour du document, ou seulement sur une partie de celui-ci. Il peut également comporter des colorants visibles sous un éclairage standard ou réagissant sous un éclairage spécifique, de façon à augmenter la visibilité du cadre lors de l'éclairage du document.

Selon une autre variante de réalisation, la couche d'apparence variable comporte des découpes, et celle-ci est directement intégrée dans l'épaisseur du cadre, par exemple au centre de la couche du cadre transparent.

L'invention sera mieux comprise à la lecture de la description à l'aidé des dessins, dans lesquels :
- la Figure 1 représente une vue en perspective éclatée d'un premier mode de réalisation de la carte selon l'invention ;
- la Figure 2 représente une vue en coupe transversale d'une carte selon la figure 1 ;
- la Figure 3 représente une vue en plan d'une carte selon la figure 1 ;
- la Figure 4 représente une vue en perspective éclatée d'un second mode de réalisation de la carte selon l'invention ;
- la Figure 5 représente une vue en coupe transversale d'une carte selon la figure 4 ;
- la Figure 6 représente une vue en plan d'une carte selon la figure 4 ;
- la Figure 7 représente une vue en perspective éclatée d'un troisième mode de réalisation de la carte selon l'invention;
- la Figure 8 représente une vue en coupe transversale d'une carte selon la figure 7;
- la Figure 9 représente une vue en plan d'une carte selon la figure 7.
- la Figure 10 représente une vue en perspective éclatée d'un quatrième mode de réalisation de la carte selon l'invention;
- la Figure 11 représente une vue en coupe transversale d'une carte selon la figure 10;
- la Figure 12 représente une vue en plan d'une carte selon la figure 10.

### Description détaillée :

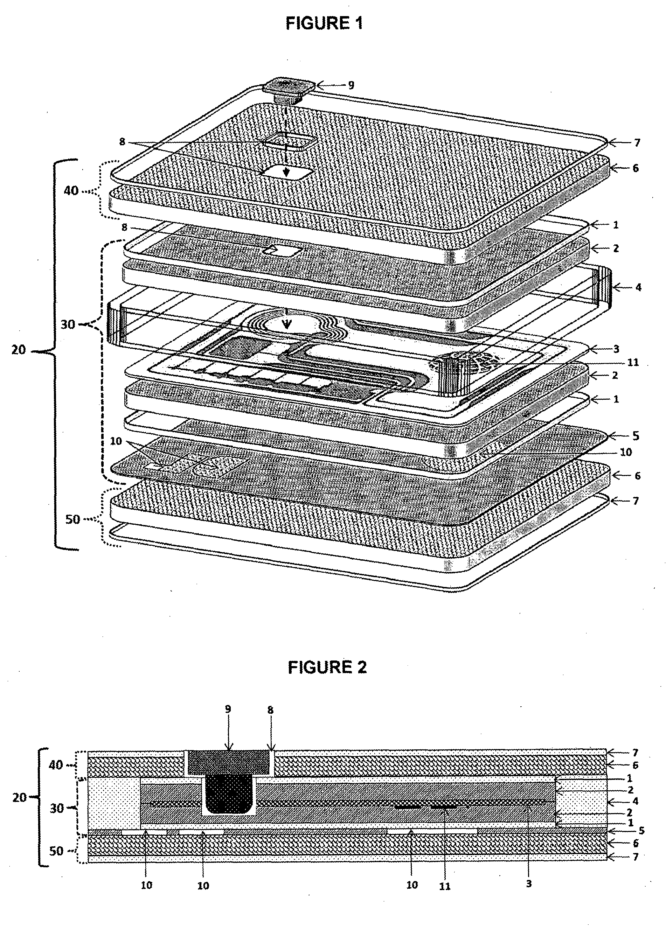

On se réfère à la Figure 1. On a représenté dans cette figure une structure 20 de carte à puce composée d'un complexe multicouche 30, et de part et d'autre de ce complexe, une partie supérieure 40 et une partie inférieure 50 solidarisées avec le complexe multicouche, typiquement par lamination à chaud.

Dans le cadre de l'invention, le complexe multicouche 30 comporte nécessairement un cadre 4 (ou une portion de cadre, comme un ou plusieurs bords) transparent à la lumière, et une partie opaque disposée à l'intérieur du cadre transparent. Une telle structure peut être obtenue de diverses manières, allant de la plus simple (un cadre transparent entourant une seule couche opaque de dimension inférieure à celle du cadre et placée à l'intérieur du cadre) et une couche transparente, à des structures plus complexes dans lesquelles le cadre transparent entoure des structures multicouches opaques.

Dans l'exemple représenté, le complexe multicouche 30 comporte un cadre transparent 4, entourant une partie centrale constituée d'une superposition de 5 couches, à savoir de haut en bas, une couche transparente 1 dans laquelle est réalisée une cavité 8 pour l'intégration d'un module microélectronique 9 apparent, une couche opaque 2, une feuille 3 comportant une antenne métallique gravée, une nouvelle couche opaque 2, une nouvelle couche transparente 1, et une couche (5) d'apparence variable comportant une ou plusieurs découpes (10).

Une telle structure multicouche est connue en soi. Il en existe d'autres, avec plus ou moins de couches, et en fonction des objectifs recherchés, les épaisseurs et la nature des couches (transparente, opaque, translucide, colorée) peuvent varier en fonction des besoins de la construction de la carte et de l'intégration souhaitée ou non d'éléments de sécurité, l'objectif étant d'obtenir des cartes à puce à contact compatibles avec les dimensions de la norme ISO 7816-1 (épaisseur de carte allant de 680 micromètres à 840 micromètres), et des cartes à puce sans contact sensiblement de la même épaisseur, voire légèrement supérieure.

Dans le cadre de l'invention, il importe que le complexe multicouche 30 présente au moins une couche opaque 2 de dimensions inférieures à celles de la carte, un cadre transparent 4 entourant un empilement de couches et selon l'invention, une couche 5 d'apparence variable en fonction de l'éclairage, c'est-à-dire ni complètement opaque ni complètement transparente.

Par contre, la couche 5 est d'apparence opaque lorsque l'observateur la regarde du point de vue d'une source de lumière, et elle est d'apparence translucide lorsque l'observateur la regarde en face d'une source de lumière. Pour simplifier, on dira que la couche 5 est "translucide".

Il importe également que la surface de cette couche translucide 5 soit égale à la surface totale du complexe multicouche 30, c'est-à-dire que la couche 5 déborde des couches centrales (1, 2, 3) pour venir recouvrir au moins en partie, et de préférence totalement, la surface du cadre transparent 4.

L'invention prévoit, pour obtenir simplement la couche translucide 5, d'utiliser une feuille d'une matière plastique normalement intrinsèquement opaque, de couleur blanche ou colorée, mais cette feuille 5 est réalisée avec une épaisseur tellement faible qu'elle est en réalité translucide dans des conditions d'éclairage appropriées. Autrement dit, le matériau et l'épaisseur de la couche 5 sont choisis pour que la couche 5 soit d'apparence opaque dans certaines conditions d'éclairage, comme par exemple lorsque l'observateur est du même côté que la lumière incidente sur ladite couche, mais qu'elle présente une apparence translucide lorsqu'elle est soumise à d'autres types éclairage, comme lorsqu'elle est disposée entre l'observateur et une source de lumière. Dans le premier cas, la lumière incidente sera réfléchie sur la couche 5, qui apparaîtra opaque ce qui permettra de lire les informations imprimées sur ladite couche. Dans le second cas, la lumière incidente traversera partiellement la couche 5, au niveau des bords entourant le complexe multicouche opaque 30, et ces bords apparaîtront comme étant translucides.

Pour la couche 5, on utilisera de préférence une feuille de polycarbonate, avec une épaisseur comprise entre 20 et 50 micromètres. Des tests ont montré qu'une épaisseur de l'ordre de 30 micromètres convenait particulièrement bien à l'effet recherché.

La feuille translucide 5 peut être placée à différents endroits de l'empilement de couches du document de sécurité. Elle peut ainsi être intégrée dans un assemblage de couches transparentes de la partie supérieure 40 ou de la partie inférieure 50 de la carte. Elle peut encore être disposée à l'interface entre la partie supérieure 40 et le complexe multicouche 30, ou à l'interface entre la partie inférieure 50 et le complexe multicouche 30. Elle peut encore faire partie intégrante du complexe multicouche 30, 30', 30", 30"', et être positionnée soit comme une couche externe de celui-ci, soit positionnée entre d'autres couches dans l'épaisseur du complexe multicouche. En particulier, elle peut être positionnée au centre de l'épaisseur du cadre 4.

Dans tous les cas de figure, afin de produire l'effet de cadre translucide recherché, au moins une partie de la feuille ou couche 5 s'étend au-delà de la zone centrale opaque du complexe multicouche 30, pour aller recouvrir au moins en partie une zone du cadre transparent 4.

Dans une variante de réalisation, la partie inférieure 50 et la partie supérieure 40 comportent chacune une couche transparente 6 imprimée, et une couche externe 7 transparente servant uniquement de protection mécanique contre les rayures ou autres.

Il résulte de cette structure un effet de contraste visuel entre le pourtour de la carte et sa partie centrale, correspondant à la superposition du cadre transparent 4 et de la feuille translucide 5 au voisinage du bord de la carte, alors que le reste de la carte est vu opaque, même lors d'une observation en face d'une source de lumière, du fait de la superposition de la couche translucide 5 et de la couche opaque 2.

Cet effet de contraste visuel est particulièrement facile à observer lorsqu'on regarde une lumière incidente à travers la carte, ce qui montrera clairement un cadre translucide entourant la partie centrale de la carte. Une autre façon de visualiser l'effet visuel consiste à regarder une face de la carte éclairée par une lumière rasante, ce qui montrera un effet de relief 3D correspondant à l'ombre projetée de la partie centrale opaque sur les bords translucides de la carte. La facilité d'observation de l'effet visuel obtenu revient à dire que l'effet visuel créé sur le bord de carte représente un élément de sécurité de niveau 1.

De façon très avantageuse, en l'absence d'un éclairage spécifique, la carte selon l'invention a une apparence uniforme, exactement comme une carte connue à bords pleins, ce qui signifie que la personnalisation graphique de la carte pourra être effectuée sur toute la surface de la carte sans être perturbée par l'effet visuel dû au cadre qui est translucide dans certains modes d'observation.

Il est à noter qu'il serait possible d'utiliser deux feuilles translucides 5, à savoir une feuille 5 disposée de part et d'autre du cadre 4. Dans ce cas on conserverait un cadre 4 présentant un certain degré de translucidité, mais on perdrait l'effet d'ombrage ou de relief 3D.

De façon avantageuse mais optionnelle, la feuille translucide 5 peut comporter une ou plusieurs découpes 10 en forme d'image, de caractères alphanumériques, de logo ou autre. Dans ce cas, lors de la lamination des différentes couches de la carte, le matériau des couches voisines de la feuille 5, en particulier le matériau de la couche transparente 1 ou de la couche transparente 6, va fluer dans les découpes 10, mais en laissant subsister une irrégularité d'épaisseur de quelques micromètres, présentant la forme de la découpe 10, totalement imperceptible au toucher, bien que visible sur le produit final lorsque celui-ci est éclairé par une lumière incidente ou rasante. Cela permet encore d'accroître le niveau de sécurité du produit. Dans ce mode de réalisation, on peut dire que l'effet visuel obtenu constitue un élément de sécurité de niveau 2.

Dans une variante encore plus sécuritaire, une découpe 10 de la feuille translucide 5 est aménagée en face d'une image 11 (image imprimée, suite de caractères, logo, hologramme etc.) réalisée sur une couche interne du complexe 30, comme par exemple la feuille 3 de support d'antenne, comme représenté en figures 1 et 2. Dans ce cas, l'image en question sera visible sur le produit final, sous un rétro éclairage adéquat, à travers les couches externes transparentes 6,7, la feuille translucide 5, et les couches 1,2, ou en vision directe à condition que la couche opaque 2 du complexe multicouche soit également pourvue d'une découpe située en face de la découpe 10 correspondante de la feuille translucide 5.

L'intérêt de ce genre de mesure réside dans le fait que, pour reproduire une carte de ce genre, un contrefacteur potentiel devra posséder l'ensemble des composants et sous-ensembles de la structure de la carte, avec les bonnes épaisseurs et les bonnes découpes réalisées aux bons endroits, ce qui compliquerait très fortement sa tâche, par rapport à la falsification des cartes existantes.

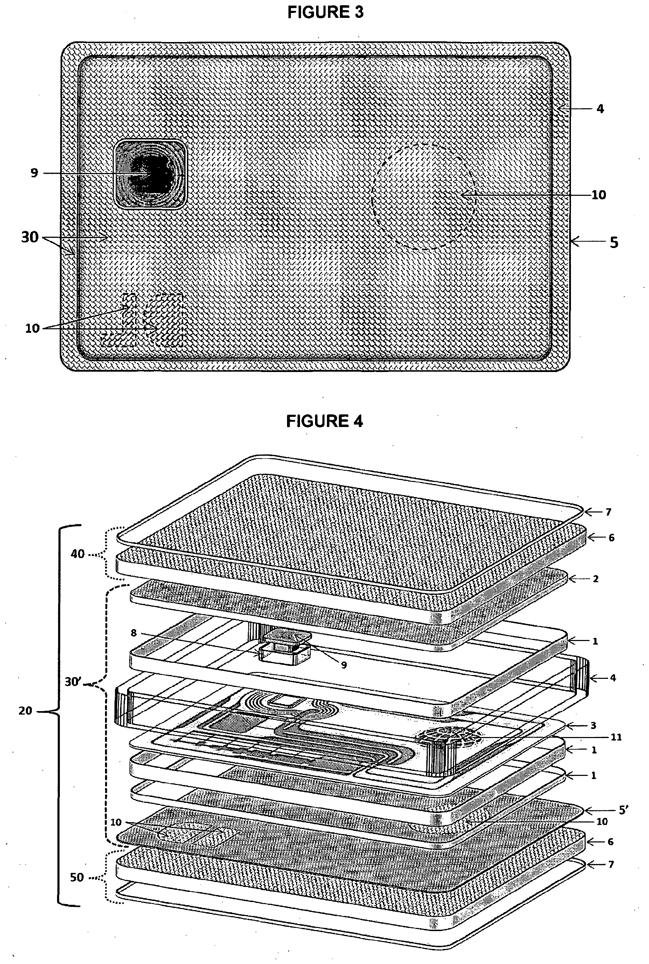

La structure de carte selon la Figure 4 présente une variante de celle des figures 1 à 3 dans la mesure où le module électronique 9 n'est plus apparent, mais enterré dans les couches 1 et 3, ce qui convient bien aux cartes à puce à fonctionnement sans contact qui interagissent avec un lecteur de carte à puce uniquement par voie radiofréquence.

En outre, l'ordre des couches 1, 2 supérieures du complexe multicouche 30' est inversé par rapport à la variante précédente, et la couche opaque 2 inférieure de la variante précédente a été remplacée par une couche transparente 1 supplémentaire. Il en résulte que le motif 11 gravé ou imprimé sur la couche 3 est visible directement à travers les couches 6,7 inférieures, l'ouverture 10 de la feuille translucide 5', et les deux couches transparentes 1, même en l'absence de forte lumière, là où le mode de réalisation précédent réclamait un apport de lumière pour déceler le motif interne 11.

Dans le mode de réalisation selon la figure 4, on obtient donc avec le motif 11, un élément de sécurité de niveau 1, visible directement sur la carte sans outil particulier.

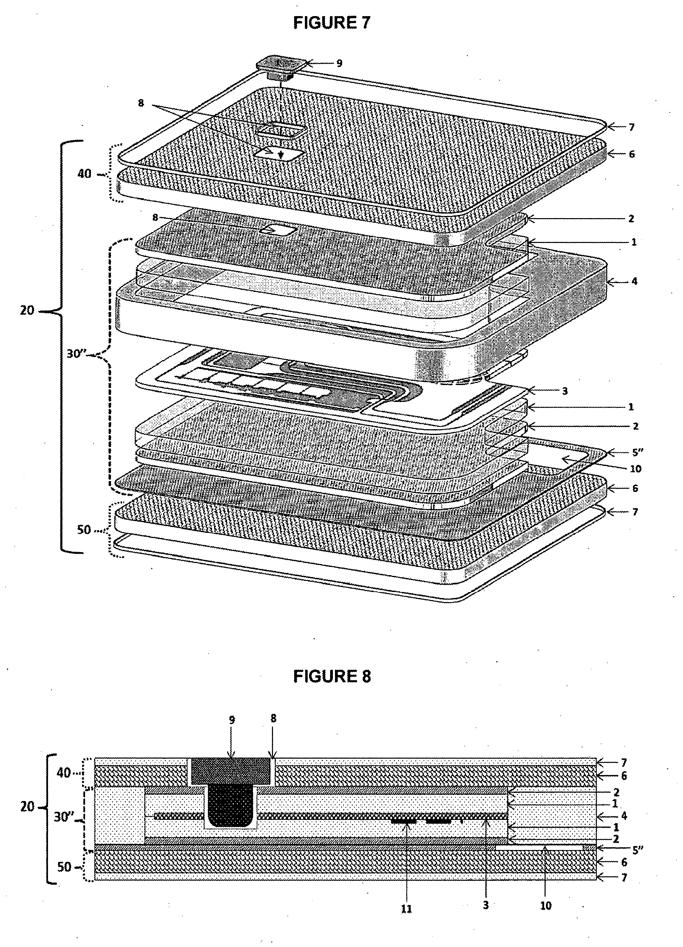

Une troisième variante de réalisation est décrite en relation avec les figures 7 à 9. Il s'agit à nouveau d'une carte à puce à module 9 apparent, mais le complexe multicouche 30" à une structure légèrement différente. Le complexe multicouche 30" comporte un empilement de couches, en l'occurrence de haut en bas : une couche 2 opaque susceptible de recevoir une personnalisation graphique, une couche transparente 1, une feuille d'antenne 3, une nouvelle couche transparente 1 et enfin une nouvelle couche opaque 2. L'ensemble des couches du complexe multicouche 30" comporte une découpe ou décrochage dans un même coin des différentes couches (coin supérieur droit sur la figure 7), et la feuille translucide 5" comporte une découpe 10 correspondante située en regard des découpes des couches 1,2,3. Par contre, le cadre transparent 4 ne comporte pas de découpe. Au contraire, il vient combler les découpes réalisées dans les couches du complexe multicouche 30".

Lorsque cette carte est regardée par rétroéclairage ou sous lumière rasante, on observera une zone opaque centrale pourvue d'une découpe dans un coin de la carte, et on observera en outre un cadre translucide pourvu d'un pavé translucide dans un coin de la carte. La personnalisation de la forme de la découpe des couches du complexe multicouche 30" et de la feuille translucide 5" forme un motif de sécurité de niveau 2, particulièrement difficile à contrefaire.

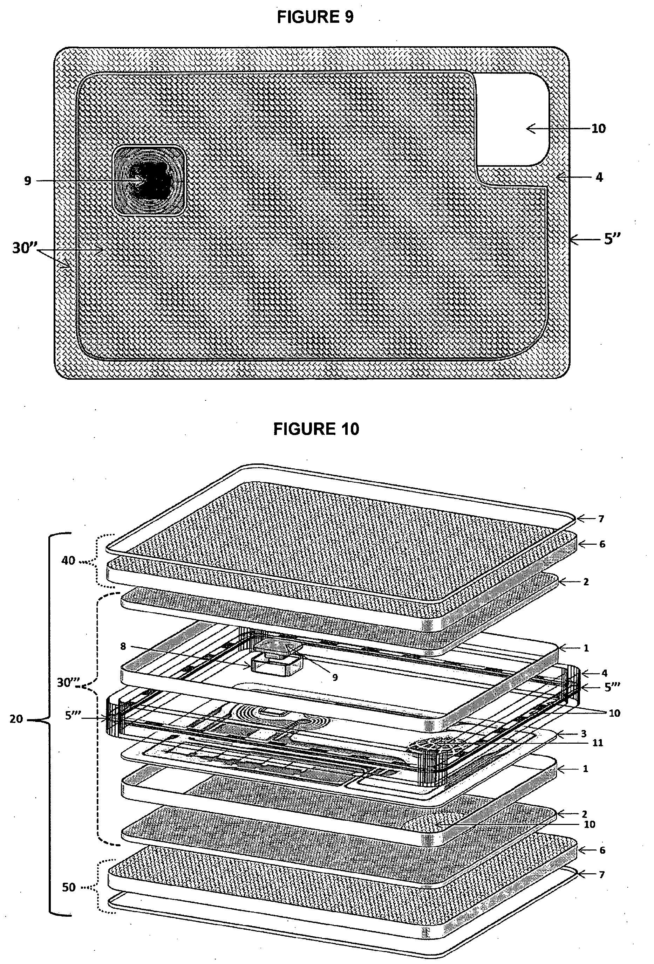

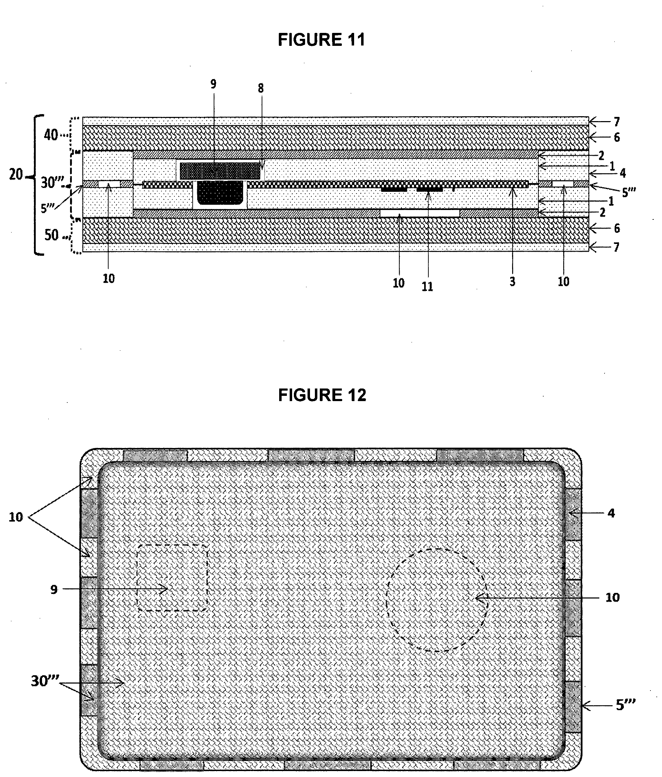

Une quatrième variante de réalisation est décrite en relation avec les figures 10 à 12. Il s'agit à nouveau d'une carte à puce à module 9 enterré, mais le complexe multicouche 30"' à une structure légèrement différente.

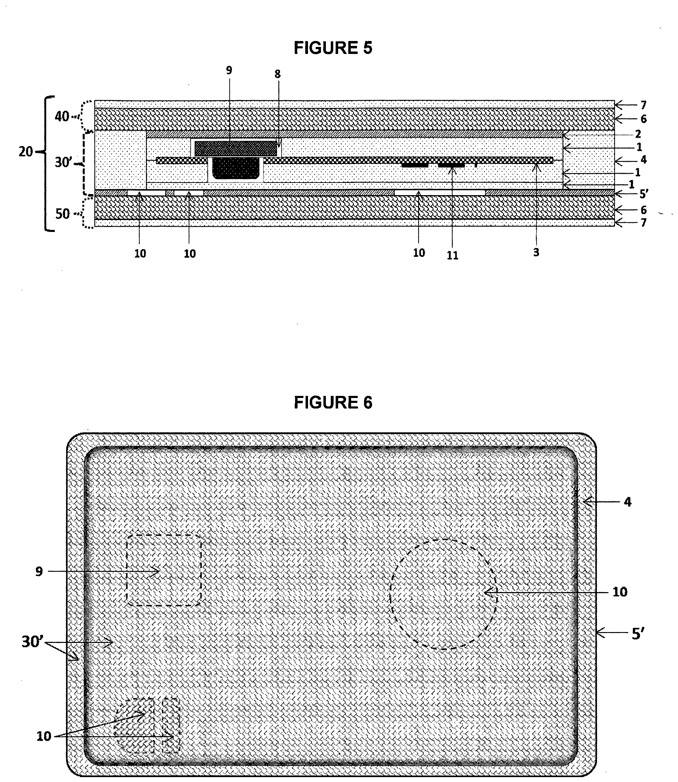

La structure de carte selon la Figure 10 présente une variante de celle des figures 4 à 6, bien que le module électronique 9 soit aussi enterré dans les couches 1, 3, ce qui convient bien aux cartes à puce à fonctionnement sans contact qui interagissent avec un lecteur de carte à puce uniquement par voie radiofréquence.

En outre, l'ordre des couches supérieures 1, 2 du complexe multicouche 30'" est identique à la variante figure 4, une couche transparente 1 inférieure est placée contre la couche 3 et la couche opaque 2 inférieure a été placée dans la partie la plus basse du complexe multicouche 30"'.

Il est à noter que dans cette variante la couche opaque 2 comporte des découpes. Il en résulte ainsi que le motif 11 gravé ou imprimé sur la couche 3 est visible directement à travers les couches inférieures 1,6,7, l'ouverture 10 de la couche opaque 2, et la couche transparente 1, même en l'absence de forte lumière, là où d'autres modes de réalisations précédents réclamaient un apport de lumière pour déceler le motif interne 11.

Dans le mode de réalisation selon la figure 10, on obtient donc avec le motif 11, un élément de sécurité de niveau 1, visible directement sur la carte sans outil particulier.

La particularité de cette variante réside dans le fait que la couche d'apparence variable 5'" qui comporte des découpes est directement intégrée dans l'épaisseur du cadre 4, en particulier au centre de la couche du cadre transparent 4, ce qui permet l'obtenir l'effet d'ombrage ou de relief 3D visible des deux côtés de la carte 20.

Il va de soi que d'autres combinaisons de couches, de découpes dans les couches, ou de formes du cadre transparent, permettent de multiplier à l'infini les modes de réalisation de l'invention.

Selon la nécessité de production, afin de solidariser toutes les couches de la carte 20, le complexe multicouche 30 est soit laminé à chaud avant d'être assemblé avec les parties supérieure 40 et inférieure 50 de la carte 20, puis laminé dans une seconde étape, soit assemblé puis laminé en une seule fois avec toutes les couches composant la carte 20.

### Avantages de l'invention :

L'invention atteint les buts fixés. En particulier, elle permet de proposer un document de sécurité, notamment une carte à puce, dont la surface imprimable est identique à celle d'une carte à bords pleins, ce qui constitue un réel avantage par rapport aux cartes à bords transparents. En outre, le cadre 4 qui apparaît de façon translucide devant une lumière, ou les découpes 10 et motifs internes 11 qui peuvent être observés, constituent autant de motifs de sécurité de niveau 1 ou 2, capables de renforcer la résistance du document de sécurité à la falsification.

En particulier, selon les conditions d'éclairage, les découpes 10 attirent ainsi le regard et permettent la mise en valeur d'éléments de sécurité visibles ou cachés.

En outre, l'invention permet une grande flexibilité de réalisation, avec un grand nombre de variantes de réalisation en jouant sur la structure du complexe multicouche, avec ou sans découpes, avec ou sans images intégrées, etc.

Par ailleurs, la mise en œuvre de l'invention est simple, elle ne nécessite pas de modifications des chaînes de fabrication, puisqu'il s'agit principalement d'intégrer une feuille 5 supplémentaire très fine de manière à être translucide, dans ou en combinaison avec un complexe multicouche 30 entouré d'un cadre 4 transparent ou transparent coloré. Cette feuille 5 est tellement fine qu'elle impacte très peu la structure du document, mais elle impacte essentiellement son apparence. En particulier, malgré le fait que la feuille 5 soit placée dans la structure en position asymétrique dans certaines variantes, elle ne perturbe pas la planéité générale ou locale de la carte.

La feuille 5 peut être aussi intégrée directement dans le cadre transparent 4, dans cette configuration la feuille 5 se retrouve placée au centre de la structure de la carte.

### Légendes des figures :

20. Carte
30. Complexe multicouche
40. Partie supérieure
50. Partie inférieure
1. Couche transparente
2. Couche opaque
3. Couche antenne
4. Cadre transparent
5. Couche fine translucide
6. Corps transparent imprimé
7. Couche externe transparente
8. Cavité du module
9. Module électronique avec puce
10. Découpe
11. Motif interne (globe)

## Revendications

1. Document de sécurité, comportant un complexe multicouche (30, 30', 30", 30"'), présentant une zone opaque entourée par un cadre transparent (4), comportant en outre une couche (5) en matière plastique qui s'étend au-delà de la zone opaque du complexe multicouche et jusque dans la zone du cadre transparent (4) de manière à créer un effet visible de cadre translucide entourant ladite zone opaque, **caractérisé en ce que** ladite couche (5) d'apparence variable est une feuille en matière plastique, de couleur blanche ou colorée, présentant une épaisseur comprise entre 20 et 50 micromètres, de préférence d'environ 30 micromètres, apte à présenter une apparence variable en fonction de son éclairage, c'est-à-dire une apparence opaque lorsque l'observateur est du même côté que la lumière incidente sur ladite couche, et une apparence translucide lorsqu'elle est disposée entre l'observateur et une source de lumière.

2. Document de sécurité selon la revendication précédente, **caractérisé en ce que** ladite couche (5) d'apparence variable comporte une ou plusieurs découpes (10) placées devant une zone opaque, de manière à faire apparaître sur le document un motif indétectable au toucher mais visible en vue directe ou par rétroéclairage.

3. Document de sécurité selon la revendication 2, **caractérisé en ce que** le complexe multicouche (30, 30', 30", 30"') comporte, en face de ladite découpe (10) de la couche (5), un motif imprimé ou gravé sur l'une des couches centrales, un OVI, un OVD, un hologramme, ou une piste d'antenne.

4. Document de sécurité selon la revendication 2 ou la revendication 3, **caractérisé en ce que** les découpes (10) de la couche (5) d'apparence variable sont décalées en bordure du document et situées en regard du cadre transparent (4).

5. Document de sécurité selon l'une quelconque des revendications précédentes, **caractérisé en ce que** ledit cadre transparent (4) peut être coloré ou non.

6. Document de sécurité selon l'une quelconque des revendications précédentes, **caractérisé en ce que** ledit cadre transparent (4) s'étend sur tout le pourtour du document, ou seulement sur une partie de celui-ci.

7. Document de sécurité selon l'une quelconque des revendications précédentes, **caractérisé en ce que** ledit cadre transparent (4) comporte des colorants visibles sous éclairage standard et réagissant sous un éclairage spécifique, et que la couche (5) d'apparence variable comporte une ou plusieurs découpes placées en regard du cadre transparent (4) coloré, de façon à créer une fenêtre totalement transparente apte à augmenter la visibilité des colorants réactifs lors de l'éclairage du document.

8. Document de sécurité selon l'une quelconque des revendications précédentes, **caractérisé en ce qu'**il comporte en outre une partie supérieure (40) et/ou une partie inférieure (50) disposées de part et d'autre du complexe multicouche (30, 30', 30",30"') et formées chacune d'une ou de plusieurs couches transparentes (6,7) en matière plastique.

9. Document de sécurité selon la revendication 8, **caractérisé en ce que** ladite couche (5) d'apparence variable est disposée entre des couches de la partie supérieure (40) ou des couches de la partie inférieure (50).

10. Document de sécurité selon l'une quelconque des revendications 1 à 7, **caractérisé en ce que** ladite couche (5) d'apparence variable est intégrée au complexe multicouche (30, 30', 30", 30"') et en constitue l'une des couches externes.

11. Document de sécurité selon l'une quelconque des revendications 1 à 7, **caractérisé en ce que** ladite couche (5) d'apparence variable est intégrée au complexe multicouche et est disposée dans l'épaisseur du cadre (4), en particulier au centre de l'épaisseur du cadre (4).

12. Document de sécurité selon l'une quelconque des revendications précédentes, **caractérisé en ce qu'**il se présente sous la forme d'une carte à puce ou sans puce au format dit ID1 correspondant à la norme ISO 7816 - 1, d'une carte au format dit ID2 qui correspond au double du format ID1, ou au format dit ID3 qui correspond au format normalisé des passeports.

13. Document de sécurité selon la revendication 6, **caractérisé en ce que** ladite feuille (5) d'apparence variable est de préférence en polycarbonate (PC) ou en un matériau thermoplastique apte à être intégré dans un assemblage laminé.

14. Document de sécurité selon l'une quelconque des revendications précédentes, **caractérisé en ce que** ledit complexe multicouche (30, 30', 30", 30"') comporte une structure multicouche comportant au moins une couche opaque (2), et une ou plusieurs couches transparentes (1).

15. Document de sécurité selon l'une quelconque des revendications précédentes, **caractérisé en ce que** ledit complexe multicouche (30, 30', 30", 30"') comporte en outre une feuille (3) pourvue d'une antenne susceptible de communiquer avec une antenne d'un lecteur distant.

## Patentansprüche

1. Sicherheitsdokument, das einen Mehrschichtkomplex (30, 30', 30", 30"') aufweist, der einen undurchsichtigen Bereich umgeben von einem durchsichtigen Rahmen (4) aufweist, der außerdem eine Schicht (5) aus Kunststoff aufweist, die sich über den undurchsichtigen Bereich des Mehrschichtkomplexes hinaus und bis in den Bereich des durchsichtigen Rahmens (4) erstreckt, um eine sichtbare Wirkung eines durchscheinenden Rahmens zu erzeugen, der den undurchsichtigen Bereich umgibt, **dadurch gekennzeichnet, dass** die Schicht (5) variablen Aussehens eine Kunststofffolie ist, von weißer Farbe oder farbig, die eine Dicke zwischen 20 und 50 Mikrometer, vorzugsweise von etwa 30 Mikrometer aufweist, die abhängig von ihrer Beleuchtung ein variables Aussehen aufweisen kann, d.h. ein undurchsichtiges Aussehen, wenn der Betrachter sich auf der gleichen Seite befindet wie das auf die Schicht einfallende Licht, und ein durchscheinendes Aussehen, wenn sie zwischen dem Betrachter und einer Lichtquelle angeordnet ist.

2. Sicherheitsdokument nach dem vorhergehenden Anspruch, **dadurch gekennzeichnet, dass** die Schicht (5) variablen Aussehens einen oder mehrere Ausschnitte (10) aufweist, die vor einem undurchsichtigen Bereich platziert sind, um auf dem Dokument ein Muster erscheinen zu lassen, das beim Berühren nicht erfassbar ist, aber in direkter Sicht oder durch Hintergrundbeleuchtung sichtbar ist.

3. Sicherheitsdokument nach Anspruch 2, **dadurch gekennzeichnet, dass** der Mehrschichtkomplex (30, 30', 30", 30"') gegenüber dem Ausschnitt (10) der Schicht (5) ein gedrucktes oder eingraviertes Muster auf einer der zentralen Schichten aufweist, eine OVI, ein OVD, ein Hologramm, oder ein Antennenpfad.

4. Sicherheitsdokument nach Anspruch 2 oder Anspruch 3, **dadurch gekennzeichnet, dass** die Ausschnitte (10) der Schicht (5) variablen Aussehens an den Rand des Dokuments verschoben sind und sich gegenüber dem durchsichtigen Rahmen (4) befinden.

5. Sicherheitsdokument nach einem der vorhergehenden Ansprüche, **dadurch gekennzeichnet, dass** der durchsichtige Rahmen (4) farbig sein kann oder nicht.

6. Sicherheitsdokument nach einem der vorhergehenden Ansprüche, **dadurch gekennzeichnet, dass** der durchsichtige Rahmen (4) sich über den ganzen Umfang des Dokuments oder nur über einen Teil von diesem erstreckt.

7. Sicherheitsdokument nach einem der vorhergehenden Ansprüche, **dadurch gekennzeichnet, dass** der durchsichtige Rahmen (4) Farbstoffe aufweist, die unter Standardbeleuchtung sichtbar sind und unter einer speziellen Beleuchtung reagieren, und dass die Schicht (5) variablen Aussehens einen oder mehrere Ausschnitte aufweist, die gegenüber dem farbigen durchsichtigen Rahmen (4) platziert sind, um ein völlig durchsichtiges Fenster zu erzeugen, das bei der Beleuchtung des Dokuments die Sichtbarkeit der reaktiven Farbstoffe erhöhen kann.

8. Sicherheitsdokument nach einem der vorhergehenden Ansprüche, **dadurch gekennzeichnet, dass** es außerdem einen oberen Teil (40) und/oder einen unteren Teil (50) aufweist, die zu beiden Seiten des Mehrschichtkomplexes (30, 30', 30", 30"') angeordnet sind und je von einer oder mehreren durchsichtigen Schichten (6, 7) aus Kunststoff gebildet werden.

9. Sicherheitsdokument nach Anspruch 8, **dadurch gekennzeichnet, dass** die Schicht (5) variablen Aussehens zwischen Schichten des oberen Teils (40) oder Schichten des unteren Teils (50) angeordnet ist.

10. Sicherheitsdokument nach einem der Ansprüche 1 bis 7, **dadurch gekennzeichnet, dass** die Schicht (5) variablen Aussehens in den Mehrschichtkomplex (30, 30', 30", 30"') integriert ist und eine der äußeren Schichten davon bildet.

11. Sicherheitsdokument nach einem der Ansprüche 1 bis 7, **dadurch gekennzeichnet, dass** die Schicht (5) variablen Aussehens in den Mehrschichtkomplex integriert und in der Dicke des Rahmens (4) angeordnet ist, insbesondere in der Mitte der Dicke des Rahmens (4) .

12. Sicherheitsdokument nach einem der vorhergehenden Ansprüche, **dadurch gekennzeichnet, dass** es in Form einer Chipkarte oder einer chiplosen Karte im Format ID1 entsprechend der Norm ISO 7816 - 1, einer Karte im Format ID2, das dem Doppelten des Formats ID1 entspricht, oder im Format ID3 vorliegt, das dem standardisierten Format der Reisepässe entspricht.

13. Sicherheitsdokument nach Anspruch 6, **dadurch gekennzeichnet, dass** die Folie (5) variablen Aussehens vorzugsweise aus Polycarbonat (PC) oder aus thermoplastischem Werkstoff ist, der in einen laminierten Verbund integriert werden kann.

14. Sicherheitsdokument nach einem der vorhergehenden Ansprüche, **dadurch gekennzeichnet, dass** der Mehrschichtkomplex (30, 30', 30", 30"') eine Mehrschichtstruktur aufweist, die mindestens eine undurchsichtige Schicht (2) und eine oder mehrere durchsichtige Schichten (1) aufweist.

15. Sicherheitsdokument nach einem der vorhergehenden Ansprüche, **dadurch gekennzeichnet, dass** der Mehrschichtkomplex (30, 30', 30", 30"') außerdem eine Folie (3) aufweist, die mit einer Antenne versehen ist, die mit einer Antenne eines fernen Lesegeräts kommunizieren kann.

## Claims

1. Security document comprising a multilayer complex (30, 30', 30", 30'''), having an opaque area surrounded by a transparent frame (4), further comprising a layer (5) made of plastic material that extends beyond the opaque area of the multilayer complex and up to the area of the transparent frame (4), so as to create a visible effect of a translucent frame surrounding said opaque area, **characterized in that** said variable appearance layer (5) is a white or coloured sheet made of plastic material, which is between 20 and 50 micrometres thick, preferably approximately 30 micrometres thick, capable of exhibiting a variable appearance as a function of its illumination, namely an opaque appearance when the observer is on the same side as the incident light on said layer, but a translucent appearance when it is disposed between the observer and a light source.

2. Security document according to the preceding claim, **characterized in that** said variable appearance layer (5) comprises one or more cutouts (10) placed in front of an opaque area, so as to cause a pattern to appear on the document that is undetectable by touch but is visible with a direct view or by backlighting.

3. Security document according to Claim 2, **characterized in that** the multilayer complex (30, 30', 30", 30"') comprises, in front of said cutout (10) of the layer (5), a pattern printed or etched on one of the central layers, an OVI, an OVD, a hologram or an antenna track.

4. Security document according to Claim 2 or Claim 3, **characterized in that** the cutouts (10) of the variable appearance layer (5) are offset on the edge of the document and are located facing the transparent frame (4).

5. Security document according to any one of the preceding claims, **characterized in that** said transparent frame (4) may or may not be coloured.

6. Security document according to any one of the preceding claims, **characterized in that** said transparent frame (4) extends over the entire periphery of the document or only over part thereof.

7. Security document according to any one of the preceding claims, **characterized in that** said transparent frame (4) comprises colorants that are visible under standard lighting and react under specific lighting, and **in that** the variable appearance layer (5) comprises one or more cutouts placed facing the coloured transparent frame (4), so as to create a fully transparent window capable of enhancing the visibility of the reactive colorants when the document is illuminated.

8. Security document according to any one of the preceding claims, **characterized in that** it further comprises an upper part (40) and/or a lower part (50) disposed either side of the multilayer complex (30, 30', 30" ,30"') and each formed by one or more transparent layers (6, 7) made of plastic material.

9. Security document according to Claim 8, **characterized in that** said variable appearance layer (5) is disposed between layers of the upper part (40) or layers of the lower part (50).

10. Security document according to any one of Claims 1 to 7, **characterized in that** said variable appearance layer (5) is integrated in the multilayer complex (30, 30', 30", 30"') and forms one of the external layers.

11. Security document according to any one of Claims 1 to 7, **characterized in that** said variable appearance layer (5) is integrated in the multilayer complex and is disposed in the thickness of the frame (4), particularly at the centre of the thickness of the frame (4).

12. Security document according to any one of the preceding claims, **characterized in that** it is in the form of a chip card or a chipless card in the "ID1" format corresponding to standard ISO 7816-1, a card in the "ID2" format corresponding to double the ID1 format or in the "ID3" format corresponding to the normalized format for passports.

13. Security document according to Claim 6, **characterized in that** said variable appearance sheet (5) is preferably made of polycarbonate (PC) or a thermoplastic material capable of being integrated in a laminated assembly.

14. Security document according to any one of the preceding claims, **characterized in that** said multilayer complex (30, 30', 30", 30"') comprises a multilayer structure comprising at least one opaque layer (2) and one or more transparent layers (1).

15. Security document according to any one of the preceding claims, **characterized in that** said multilayer complex (30, 30', 30", 30"') further comprises a sheet (3) provided with an antenna capable of communicating with an antenna of a remote reader.
